# FASCICULE DE BREVET EUROPEEN

(11) **EP 3 596 335 B1**
(45) Date de publication et mention de la délivrance du brevet: **04.05.2022**
(21) Numéro de dépôt: 18714573.5
(22) Date de dépôt: 14.03.2018
(51) Int. Cl.: F03B 7/00, F03B 17/06

(54) **DISPOSITIF POUR LA PRODUCTION D'ÉNERGIE HYDRO-ÉLECTRIQUE**
VORRICHTUNG ZUR ERZEUGUNG VON HYDROELEKTRISCHER ENERGIE
DEVICE FOR PRODUCING HYDRO-ELECTRIC POWER

(30) Priorité: 17.03.2017 FR 1752188
(43) Date de publication de la demande: 22.01.2020
(73) Titulaire: Grandperret, Gilles, 88120 Vagney (FR)
(72) Inventeur: Grandperret, Gilles, 88120 Vagney (FR)
(74) Mandataire: Hugues, Catherine
(86) Numéro de dépôt international: PCT/FR2018/050604
(87) Numéro de publication internationale: WO 2018/167424

(56) Documents cités:
- FR-A1- 3 010 151
- US-A- 4 598 210
- US-B1- 8 546 966

## Description

La présente invention a pour objet un dispositif pour la production d'énergie hydro-électrique comportant au moins une roue à eau solidaire d'au moins une plate-forme dont au moins une face supérieure est émergée, ladite roue à eau étant formée d'une pluralité de pales prolongeant les extrémités libres de bras répartis autour d'un moyeu, et étant destinée à être entraînée en rotation sous l'effet de l'écoulement de l'eau d'un cours d'eau autour d'un axe (X) d'allure horizontale, perpendiculaire à la direction d'écoulement dudit cours d'eau, pour actionner une turbine et produire de l'électricité au travers d'une génératrice.

Depuis l'apparition de l'électricité au cours de la seconde moitié du 19ème siècle, de nombreuses technologies ont progressivement été développées afin de permettre sa diffusion à travers le monde, disposer de l'énergie nécessaire à l'essor industriel concomitant, et répondre aux besoins en électricité générés par le développement des technologies.

Dans ce contexte, de nombreux procédés et dispositifs de production d'électricité à partir d'énergie hydraulique ont ainsi notamment vus le jour, permettant actuellement de contribuer à environ 20% de la production mondiale totale en électricité.

De manière connue, les différents types d'infrastructures dédiées à la transformation de l'énergie hydraulique en énergie électrique, connues à ce jour, sont spécifiquement étudiées et dimensionnées en fonction de leur environnement d'implantation et des besoins du réseau auquel elles sont raccordées.

Ces infrastructures reposent parfois sur une architecture complexe nécessitant des moyens financiers importants pour leur installation et leur mise en œuvre. Les barrages hydroélectriques notamment impliquent généralement une profonde transformation du site, suite à de lourds travaux de génie civil extrêmement onéreux et sont souvent sujets à controverse, notamment du fait de leur impact négatif sur le paysage, et leur répercussion sur l'écosystème environnant.

Il existe également des systèmes moins complexes que les barrages, dont l'implantation sur un cours d'eau est moins contraignante, comme par exemple ceux reposant sur la mise en œuvre de roues à eau. On connait notamment de la publication US 4 598 210 un dispositif pour la production d'énergie hydroélectrique comportant deux roues à eau formées d'une pluralité de pales reliées à un axe solidaire soit d'un générateur électrique, soit d'un compresseur à air, soit d'une pompe à eau ou similaire dont est équipée une plate-forme destinée à être ancrée dans un courant d'eau.

Cependant, il a été constaté que ces dispositifs présentent souvent de faibles rendements tout en nécessitant néanmoins un investissement important. Ils sont donc encore peu plébiscités

Aussi, à l'heure actuelle, bien que l'hydroélectricité soit considérée comme une énergie renouvelable respectueuse de l'environnement, sa production soulève encore de nombreuses problématiques qui en limitent le développement, malgré l'énorme potentiel par ailleurs espéré.

La présente invention a par conséquent pour but de proposer un dispositif de production d'énergie hydroélectrique innovant, de structure simple, dont l'installation ne nécessite pas ou peu de travaux de génie civil et n'a qu'une faible incidence sur le paysage environnant, un tel dispositif permettant une production d'énergie électrique au travers d'un procédé respectueux de l'environnement, ne générant pas de gaz à effet de serre, dépourvu d'impact sur la faune et la flore du site et contribuant au contraire à la préservation du cours d'eau, tout en présentant un rendement élevé.

A cet effet, la présente invention concerne un dispositif pour la production d'énergie hydro-électrique du genre indiqué en préambule, caractérisé en ce qu'il comporte des moyens d'actionnement, sous l'effet de la rotation de la roue à eau, d'au moins un moyen de compression d'un fluide destiné à l'alimentation de ladite turbine.

Selon la présente invention lesdits moyens de compression d'un fluide comportent au moins un compresseur d'air présentant une enceinte pourvue d'au moins un orifice d'entrée d'air, et d'au moins un orifice de sortie d'air comprimé communiquant avec ladite turbine, ladite enceinte étant délimitée par un fond, un volet supérieur, et une paroi périphérique dont au moins une partie est déformable, ledit fond ou ledit volet supérieur étant mobile entre un état inactif dans lequel ledit fond et ledit volet forment ensemble un angle aigu α0 et un état actif dans lequel ils forment ensemble un angle aigu α1 inférieur à α0, tandis que lesdits moyens d'actionnement comportent au moins une barre rotative, d'axe parallèle au plan formé par ladite roue à eau, ladite barre rotative étant entraînée en rotation autour dudit axe (X) par ladite roue à eau au travers d'un arbre couplé audit moyeu, et comportant au moins une extrémité libre solidaire d'un organe conçu apte à agir sur le volet supérieur ou le fond de ladite enceinte pour provoquer son déplacement depuis son état inactif vers son état actif.

Conformément à une variante de réalisation envisageable, ledit organe est défini par une roulette montée en rotation sur l'extrémité libre de la barre rotative, autour d'un axe parallèle à l'axe X, ladite roulette étant conçue apte à exercer sur le volet supérieur une action ayant une composante d'allure verticale orientée en direction du cours d'eau, au cours de la rotation de la barre rotative.

Conformément à une autre variante de réalisation envisageable, ledit organe est défini par une bielle dont une première extrémité est solidaire de l'extrémité libre de la barre rotative et une seconde extrémité est montée en rotation autour d'un axe parallèle à l'axe X sur un bras s'étendant dans le prolongement du volet supérieur ou du fond de ladite enceinte, parallèlement au plan formé par ces derniers.

Conformément à une caractéristique additionnelle de l'invention, ladite enceinte renferme au moins un moyen de rappel élastique s'étendant entre ledit fond et ledit volet supérieur, et à l'encontre duquel s'effectue le déplacement vers son état actif dudit volet supérieur.

La présente invention prévoit par ailleurs que ledit volet supérieur est monté en rotation par rapport audit fond et est relié à des moyens de guidage en rotation.

Une autre caractéristique est définie par le fait que la paroi périphérique est pliée en accordéon en formant des plis horizontaux et est mobile entre une position étirée et une position resserrée.

Par ailleurs, la paroi périphérique peut avantageusement être au moins partiellement réalisée en un matériau déformable tel que du vitrimère (marque déposée) « souple », tandis que le volet supérieur et/ou le fond est/sont réalisé(s) en un matériau rigide tel que du vitrimère (marque déposée) « dur ».

Le dispositif selon l'invention présente également la spécificité de comporter, au moins dans une variante de réalisation particulière, un réservoir d'air comprimé relié à l'orifice de sortie d'air comprimé de ladite enceinte par un premier canal et à un orifice d'entrée d'air comprimé de ladite turbine par un second canal.

Dans ce cas, l'ouverture et la fermeture desdits premier et second canaux sont préférentiellement pilotées par des première et seconde électrovannes.

Par ailleurs, l'invention peut également prévoir que ladite enceinte comporte un orifice de sortie d'air comprimé relié avec un canal configuré pour déboucher dans ledit cours d'eau et, le cas échéant, pour circuler sur le trajet effectué par l'air comprimé après son injection dans ladite turbine à travers son orifice d'entrée d'air comprimé.

Conformément à une variante de réalisation envisageable, les moyens de compression d'un fluide peuvent également **comporter au moins un vérin hydraulique ou un moteur** hydrostatique s'étendant dans ladite enceinte entre ledit fond et ledit volet supérieur.

Le vérin hydraulique est alors relié à ladite turbine au moyen de canaux sur le trajet desquels est placé au moins un réservoir d'huile comprimée.

Par ailleurs le dispositif selon l'invention se caractérise encore en ce que ladite plate-forme est pourvue de flotteurs permettant de maintenir au moins sa face supérieure émergée.

D'autres caractéristiques et avantages de l'invention ressortiront de la description détaillée qui va suivre se rapportant à deux exemples de réalisation du dispositif pour la production d'énergie hydro-électrique, donnés uniquement à titre indicatif et non limitatif.

La compréhension de cette description sera facilitée en se référant aux dessins joints, dans lesquels :
- La figure 1 illustre une vue schématique de côté d'une première variante de réalisation d'un dispositif pour la production d'énergie hydro-électrique selon l'invention,
- La figure 2 est une vue schématique de dessus du dispositif de la figure 1,
- Les figures 3 à 6 correspondent à des vues schématiques de côté du dispositif de la figure 1 au cours de différentes phases de fonctionnement,
- La figure 7 correspond à une vue schématique de côté d'une seconde variante de réalisation d'un dispositif pour la production d'énergie hydro-électrique selon l'invention,
- La figure 8 illustre une vue schématique agrandie du compresseur à air du dispositif des figures 1 à 7,
- Les figures 9 et 10 illustrent une vue en détail selon deux états différents d'un élément structurel du dispositif de la figure 1, et
- Les figures 11 à 15 correspondent à des vues schématiques de côté d'une autre variante de réalisation du dispositif selon l'invention au cours d'un cycle de fonctionnement.

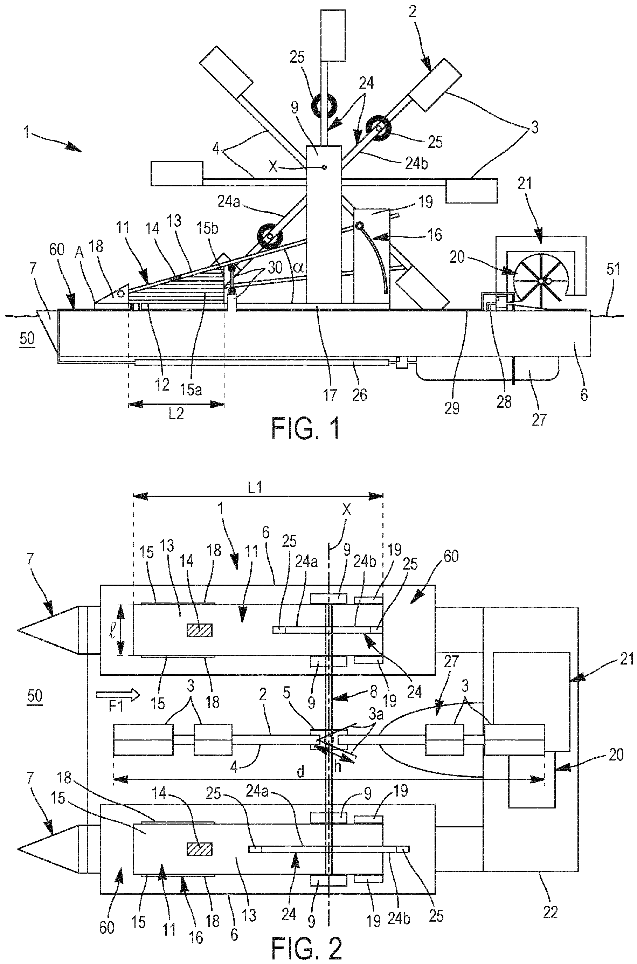

Dans les variantes de réalisation illustrées aux figures 1 à 10, le dispositif de production d'énergie hydroélectrique 1, 10 selon l'invention comporte une roue à eau 2 présentant une pluralité de pales 3 à section en « V » prolongeant des bras 4 uniformément répartis autour d'un moyeu 5. De manière classique, sa rotation dans le sens de la flèche F, permettant la production d'énergie mécanique, s'effectue autour d'un axe X à la fois horizontal et perpendiculaire à la direction d'écoulement F1 du cours d'eau 50 dans lequel la roue à eau 2 est implantée, et est provoquée par des forces provenant du transfert de masses entre l'eau et les pales 3.

L'énergie mécanique produite permet d'entraîner une turbine 20 reliée à une génératrice 21 d'énergie électrique. Il convient de noter que dans les exemples illustrés, la roue à eau 2 présente un diamètre d d'environ 5m, et est munie de pales 3 dont chaque volet 3a a une hauteur h (cf. fig. 2) de l'ordre de 0,6m. Une telle roue à eau 2 est plus particulièrement conçue et dimensionnée en vue d'une implantation du dispositif 1, 10 dans une rivière ou un fleuve 50 dont le débit est d'au moins 1m/s, et présentant une profondeur minimale de 2,5m. Bien entendu, il est cependant possible d'adapter le dispositif aux spécificités du site considéré en prévoyant notamment d'autres dimensions que celles indiquées ci-dessus pour les pales 3 et la roue à eau 2.

Cette dernière est par ailleurs solidaire d'une plate-forme flottante comportant deux éléments 6 dont au moins la face supérieure 60 émerge au-dessus du niveau 51 du cours d'eau 50. Les deux éléments 6 sont munis chacun d'un flotteur 7 et sont amarrés, par exemple à une berge, par des moyens appropriés tels que notamment un câble métallique (non illustré), ou tout autre moyen équivalent.

En référence à la figure 2, dans les exemples illustrés, la roue à eau 2 est en fait supportée, au travers d'un arbre 8 d'axe X traversant le moyeu 5, par deux paires de piliers 9 érigés sur la face supérieure 60 des éléments 6 de plate-forme, et s'étendant chacun de part et d'autre du plan formé par la roue à eau 2. La turbine 20 et la génératrice 21 sont supportées par un socle 22 s'étendant transversalement, en aval des éléments 6.

Conformément à l'invention, dans les variantes de réalisation illustrées aux figures 1 à 10, le dispositif 1, 10 comporte également deux compresseurs d'air 11 supportés chacun par un élément de plate-forme 6. Ils sont disposés entre une paire de piliers 9 et reliés à la turbine 20.

Chaque compresseur d'air 11 comporte une enceinte, surplombant la face supérieure 60 d'un élément 6. Chaque enceinte est délimitée par un fond 12, un volet supérieur 13 muni d'un clapet 14 pour l'entrée d'air environnant et une paroi périphérique 15.

De préférence, le volet supérieur 13 et/ou le fond 12 sont/est réalisé(s) en un matériau rigide, tel que notamment du vitrimère (marque déposée) « dur », du plastique, un métal, un matériau composite ou tout autre matériau équivalent.

La paroi périphérique 15 est déformable et est à cet effet pliée en accordéon, de manière telle que chacun des plis qu'elle comporte s'étende dans un plan horizontal. Elle est de préférence réalisée en un matériau souple tel que par exemple du vitrimère (marque déposée) « souple », ou tout autre matériau équivalent.

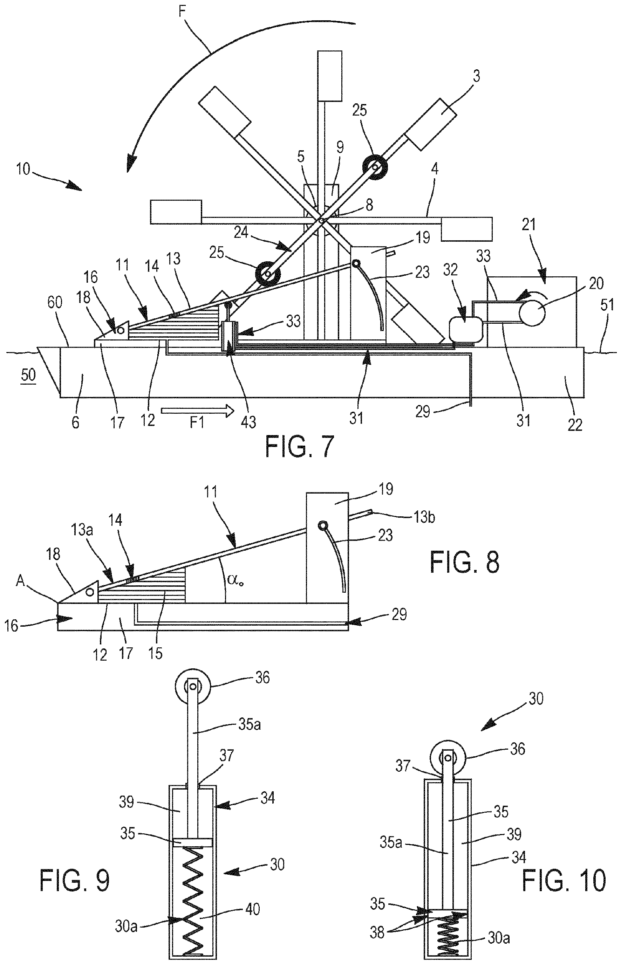

L'enceinte est par ailleurs solidaire d'un châssis 16, par exemple en aluminium, présentant une base 17 de forme parallélépipédique et comportant, de part et d'autre de ses extrémités amont, aval, une paire de platines 18, 19 s'étendant verticalement et auxquelles sont reliés respectivement les bords amont 13a et aval 13b du volet supérieur 13 de ladite enceinte (cf. figure 8).

En fait, le volet supérieur 13 forme, avec le fond 12 horizontal de l'enceinte, un angle α aigu dont le sommet A (cf. fig. 1 et fig. 8) est orienté de sorte à se situer du côté du bord amont 13a du volet supérieur 13.

Ce dernier est par ailleurs monté mobile en rotation sur les platines 18 autour d'un axe parallèle à l'axe X, tandis que le bord aval 13b est guidé en rotation par rapport aux platines 19, qui comportent chacune à cet effet une coulisse de guidage 23.

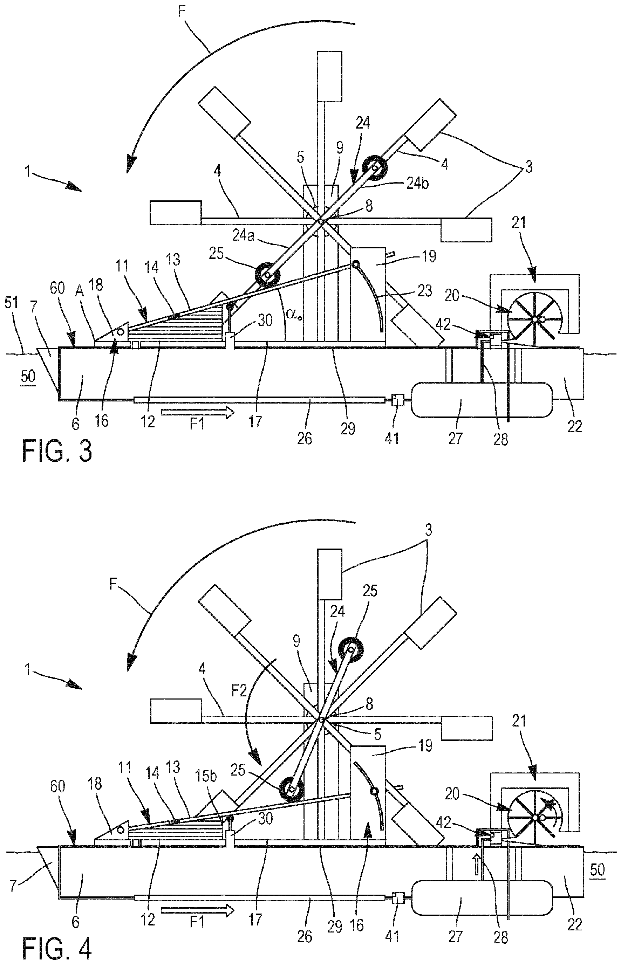

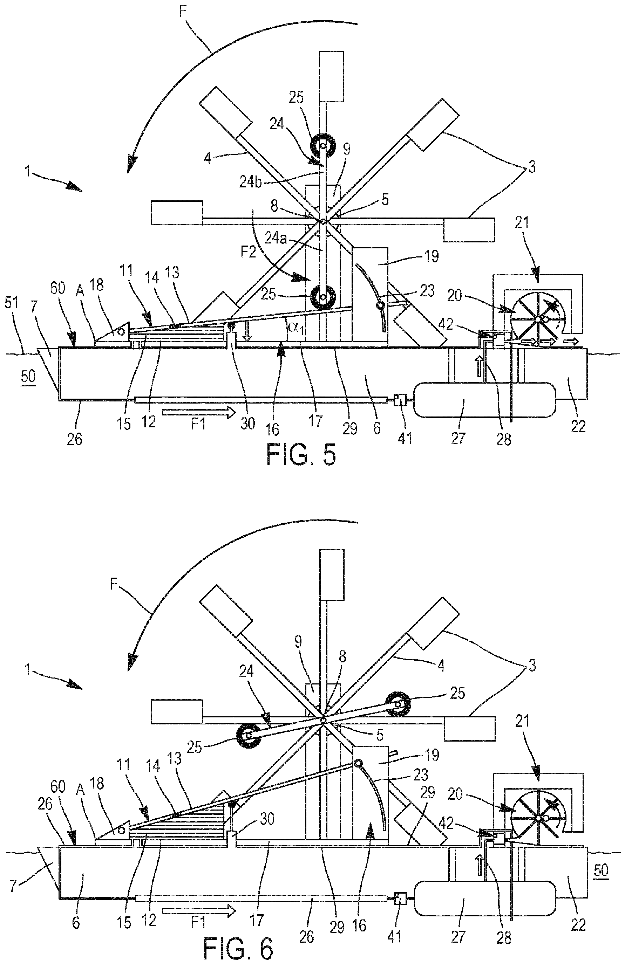

Le volet supérieur 13 de chaque compresseur d'air 11 est ainsi mobile entre une position inactive dans laquelle il forme un angle α0 avec le fond 12 (figure 3) et la paroi périphérique 15 est dépliée, et une position active dans laquelle il forme avec le fond 12 un angle α1 inférieur à α0 (figure 5) et la paroi périphérique 15 est resserrée.

Il convient également de préciser que le volet supérieur 13 de chaque compresseur d'air 11 présente une longueur L1 choisie parmi la plage de valeurs allant de 2,5m à 6m pour une largeur 1 choisie parmi la plage de valeurs allant de 1m à 2m, tandis que la paroi périphérique 15 présente deux parois latérales opposées 15a dont la longueur L2 est comprise entre 1m et 2m et une paroi arrière 15b de largeur 1 comprise entre 1m et 2m(cf. figures 1 et 2).

Dans la variante de réalisation illustrée aux figures 1 à 6, l'enceinte de chaque compresseur d'air 11 communique avec un premier canal 26 relié à un réservoir d'air comprimé 27, commun aux deux compresseurs 11 par exemple situé sous l'eau, et lui-même relié à la turbine 20 au travers d'un second canal 28. Deux électrovannes 41, 42, disposées en amont respectivement du réservoir 27 et de la turbine 20, permettent de piloter l'ouverture et la fermeture des canaux 26, 28. L'enceinte comporte également un canal 29 supplémentaire, configuré pour déboucher dans ledit cours d'eau 50 et pour traverser, dans la turbine 20, le trajet effectué par l'air comprimé en provenance du réservoir 27.

Il convient de noter que dans la variante de réalisation illustrée à la figure 7, le dispositif 10 ne comporte pas de réservoir à air comprimé 27, tandis que l'enceinte de chaque compresseur d'air 11 n'est reliée qu'au seul canal 29 communiquant avec le cours d'eau 50.

Conformément à l'invention, dans les deux variantes de réalisation illustrées, le changement de position du volet supérieur 13 de chaque compresseur d'air 11 du dispositif 1, 10, de son état inactif vers son état actif, est réalisé au moyen d'une barre rotative 24 assujettie au mouvement de l'arbre 8, lui-même entraîné en rotation dans le sens de la flèche F par la rotation de la roue à eau 2. Chaque barre rotative 24 est ainsi couplée à l'arbre 8, et engagée sur celui-ci de manière à s'étendre perpendiculairement à la roue à eau 2, entre deux piliers 9, au-dessus d'un volet supérieur 13 et de manière telle qu'elle présente deux tronçons 24a, 24b, de préférence de longueur identique, s'étendant autour de l'arbre 8. De plus, la longueur de chaque barre rotative 24 est choisie de manière telle que lors de sa rotation, chacune des roulettes 25, dont est équipée l'extrémité de chacun des tronçons 24a, 24b, entre successivement en contact avec le volet supérieur 13 d'un compresseur d'air 11.

En d'autres termes, le passage à la position active de chaque volet supérieur 13 s'effectue par appui progressif, sur ce dernier, d'une roulette 25 lors de la course qu'elle effectue au-dessus de lui, au fil de la rotation dans le sens de la flèche F2, de la barre rotative 24.

En ce qui concerne la variante de réalisation illustrée aux figures 1 à 6, cette phase s'accompagne d'une compression d'au moins un moyen de rappel élastique 30 s'étendant entre le fond 12 de ladite enceinte et le volet supérieur 13 (cf. fig.3-5). Lorsque la roulette 25, au fil de la rotation dans le sens de la flèche F2 de la barre rotative 24, quitte le volet supérieur 13 (cf. fig.6), celui-ci est libéré de la pression exercée par la barre rotative 24 via une roulette 25 et relâche lui-même le moyen de rappel élastique 30 dont la détente permet alors le retour complet vers sa position inactive dudit volet supérieur 13.

Plus particulièrement en référence aux figures 9 et 10, dans la variante de réalisation illustrée, le moyen de rappel élastique 30 comporte un ressort de compression 30a, logé au fond d'un cylindre vertical 34 s'étendant depuis le fond 12 de l'enceinte d'un compresseur à air 11. Le ressort de compression 30a est relié à son extrémité supérieure à un piston 35 dont le bras 35a émerge du cylindre 34 et est muni d'une roulette 36, prenant appui contre la face interne du volet supérieur 13. Le cylindre 34 est pourvu d'un premier joint 37 positionné au voisinage de son bord supérieur et d'un second joint 38 placé autour du piston 35 sur l'extrémité supérieure du ressort de compression 30a. Ainsi, le cylindre 34 est départagé en une chambre supérieure 39 dans laquelle est logé le bras 35a du piston 35 et une chambre inférieure 40, dans laquelle est logé le ressort de compression 30a, et dont le volume varie en fonction du mouvement de translation verticale du piston 35 provoqué par le déplacement du volet supérieur 13. Lorsque le volume de la chambre inférieure 40 diminue, l'air qui y est contenu se trouve comprimé tout comme le ressort de compression 30a qui y est logé. C'est finalement la détente aussi bien du ressort de compression 30a que de l'air contenu dans la chambre inférieure 40 qui va permettre le retour complet du volet supérieur 13 dans sa position inactive et le dépliement de la paroi périphérique 15.

En référence aux figures 1 à 6, grâce à une telle structure du dispositif 1 selon l'invention, dans la position inactive du volet supérieur 13, dans laquelle la paroi périphérique 15 est étirée (figure 3), et les électrovannes 41, 42 sont fermées, l'air environnant pénétrant dans l'enceinte est à pression atmosphérique. Lorsque le volet supérieur 13 passe progressivement vers sa position active sous l'action de la barre rotative 24 animée de son mouvement de rotation, la paroi périphérique 15 se resserre (figure 5), le volume de l'enceinte diminue, provoquant la compression de l'air qui y est contenu. Après l'ouverture des électrovannes 41, 42, l'air comprimé est évacué par un orifice de sortie d'air en direction du premier canal 26 relié au réservoir d'air comprimé 27, où il peut être temporairement stocké avant d'être injecté dans la turbine 20 au travers du second canal 28, pour permettre la production d'électricité par la génératrice 21. Une autre partie de l'air comprimé produit dans le compresseur d'air 11 est évacuée de l'enceinte au moyen du canal 29 supplémentaire configuré pour déboucher dans ledit cours d'eau et traversant, dans la turbine 20, le trajet effectué par l'air comprimé en provenance du réservoir 27. Cette dernière caractéristique permet d'une part d'injecter de l'air dans le cours d'eau et donc de participer à son oxygénation, et d'autre part de réchauffer l'air comprimé en provenance du réservoir 27 pour éviter les éventuels phénomènes de formation de givre à l'entrée de la turbine 20 qui nuiraient au rendement du dispositif 1.

Comme déjà indiqué ci-dessus, dans la variante de réalisation illustrée à la figure 7, le dispositif 10 selon l'invention ne comporte qu'un seul canal 29 d'évacuation de l'air comprimé produit par chaque compresseur d'air 11 directement dans le cours d'eau, et est dépourvu de réservoir à air comprimé. En effet, dans cette variante, la turbine 20 est entraînée par de l'huile comprimée produite au moyen d'au moins un vérin hydraulique 43 s'étendant entre le fond 12 de chaque compresseur d'air 11 et son volet supérieur 13 et actionné lors du déplacement de ce dernier entre sa position inactive et sa position active sous l'effet de la barre rotative 24. En fait, dans cette variante, l'huile comprimée produite dans le vérin 43 est évacuée au moyen d'un canal 31 vers la turbine 20 via un réservoir 32 de stockage au moins temporaire d'huile. A la sortie de la turbine 20 l'huile, à nouveau à pression atmosphérique, réalimente le vérin hydraulique 29 via un canal 33.

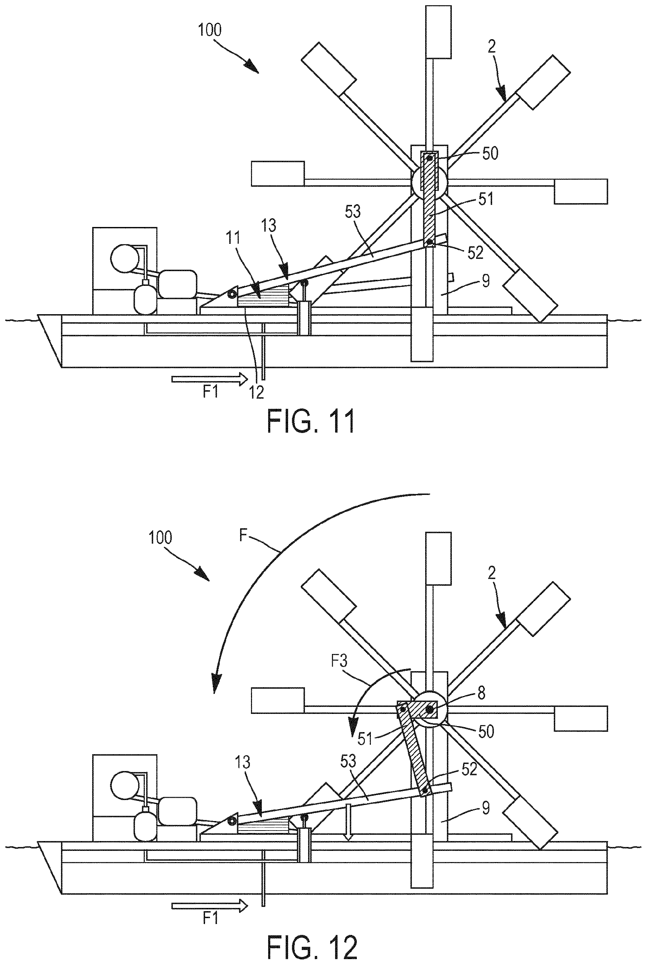

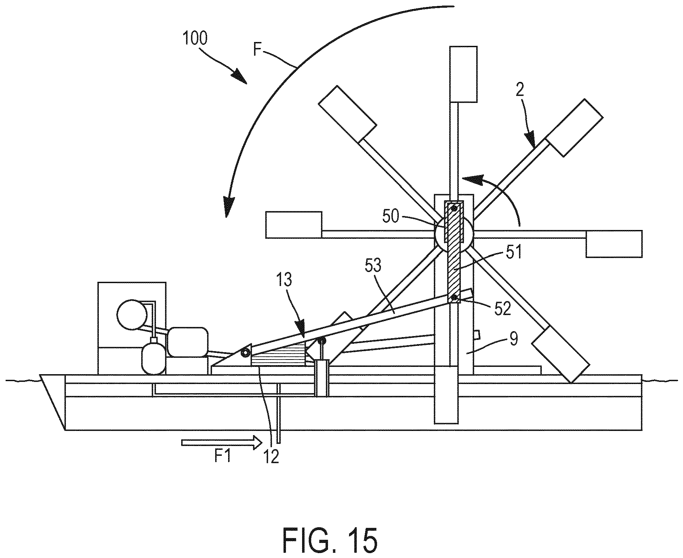

La présente demande entend également couvrir d'autres variantes de réalisation du dispositif selon l'invention, dont notamment celle dont le fonctionnement est illustré aux figures 11 à 15. Du fait que sa structure est à peu de choses près identique à celle de la variante de réalisation représentée à la figure 7, seuls quelques éléments structurels communs ainsi que les éléments se distinguant de cette dernière ont été référencés sur les dessins, pour des raisons de clarté.

Ainsi, tel qu'illustré aux figures 11 à 15, l'invention a également pour objet un dispositif de production d'énergie hydroélectrique 100 avec lequel le changement de position du volet supérieur 13 de chaque compresseur d'air 11 de son état inactif vers son état actif, est réalisé au moyen d'un ensemble formé d'une part d'une barre rotative 50 assujettie au mouvement de l'arbre 8, lui-même entraîné en rotation dans le sens de la flèche F par la rotation de la roue à eau 2, et d'autre part d'une bielle 51, elle-même assujettie au mouvement de rotation de la barre rotative 50. En fait, chaque barre rotative 50 est couplée, par une de ses extrémités à l'arbre 8, et engagée sur celui-ci de manière à s'étendre perpendiculairement à la roue à eau 2, entre deux piliers 9, au-dessus d'un volet supérieur 13. La bielle 51 est reliée fixement, par une de ses extrémités, à la barre rotative 50, tandis que son autre extrémité est montée en rotation, autour d'un axe 52 parallèle à l'axe de rotation de la roue à eau 2, sur un bras 53 s'étendant dans le prolongement du volet supérieur 13 ou du fond 12 de ladite enceinte, parallèlement au plan formé par ces derniers.

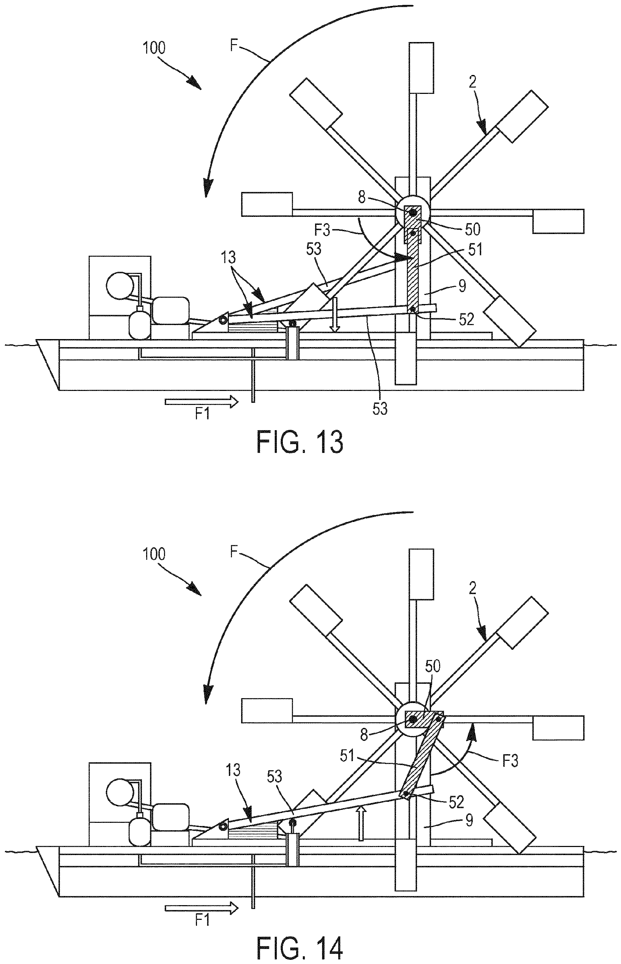

Grâce à une telle structure, le passage de la position inactive du volet supérieur 13 (fig. 11) à sa position active (fig. 12-13) s'effectue par appui progressif de la bielle 51 sur le bras 53 lors de la course qu'elle effectue, au fil de la rotation dans le sens antihoraire (illustré par la flèche F3) de la barre rotative 50. Ainsi, au début du mouvement de rotation du bras 50, la bielle 51 soumet le bras 53 à une action à composante verticale orientée en direction du cours d'eau. Puis, en continuant sa course, la bielle 51 soumet le bras 53 à une action à composante verticale orientée en direction de l'arbre 8 de la roue à eau 2 provoquant ainsi le retour du volet supérieur 13 dans sa position inactive (fig. 14-15) .

Tel qu'il ressort clairement de ce qui précède, la présente invention permet d'atteindre les objectifs énoncés en préambule au travers d'un dispositif 1, 10 de production d'énergie hydroélectrique mettant en œuvre une roue à eau dont le rendement est amélioré grâce à l'effet de levier des deux barres rotatives 24 permettant de décupler l'énergie mécanique transmise à la turbine 20 au travers des compresseurs d'air 11 et/ou du vérin hydraulique 43. Il est ainsi envisageable d'atteindre une puissance de l'ordre de 50 kWh/h à 250kW/h avec une vitesse de courant de 1m/s.

Par ailleurs, grâce à sa structure simplifiée, le dispositif 1, 10 selon l'invention permet de générer du courant électrique renouvelable avec un rendement amélioré sans nécessiter d'importants travaux de génie civil, donc au travers d'un faible investissement et d'un impact environnemental, notamment paysager, réduit. Par ailleurs, grâce à un brassage important de l'eau accompagné d'une injection régulière d'air dans l'eau, le dispositif 1, 10 selon l'invention contribue à une amélioration de la qualité du cours d'eau dans lequel il est implanté et présente des effets positifs sur l'ensemble de l'écosystème environnant.

## Revendications

1. Dispositif (1, 10) pour la production d'énergie hydroélectrique, comportant au moins une roue à eau (2) solidaire d'au moins une plate-forme dont au moins une face supérieure (60) est émergée, ladite roue à eau (2) étant formée d'une pluralité de pales (3) prolongeant les extrémités libres de bras (4) répartis autour d'un moyeu (5), et étant destinée à être entraînée en rotation sous l'effet de l'écoulement de l'eau d'un cours d'eau (50) autour d'un axe (X) d'allure horizontale, perpendiculaire à la direction d'écoulement dudit cours d'eau (50), pour actionner une turbine (20) et produire de l'électricité au travers d'une génératrice (21), **caractérisé en ce qu'**il comporte des moyens d'actionnement, sous l'effet de la rotation de la roue à eau (2), d'au moins un moyen de compression d'un fluide destiné à l'alimentation de ladite turbine (20), et **en ce que** ledit au moins un moyen de compression d'un fluide comporte au moins un compresseur d'air (11) présentant une enceinte pourvue d'au moins un orifice d'entrée d'air, et d'au moins un orifice de sortie d'air comprimé communiquant avec ladite turbine (20), ladite enceinte étant délimitée par un fond (12), un volet supérieur (13), et une paroi périphérique (15) dont au moins une partie est déformable, ledit fond (12) ou ledit volet supérieur (13) étant mobile entre un état inactif dans lequel ledit fond (12) et ledit volet supérieur (13) forment ensemble un angle aigu α0 et un état actif dans lequel ils forment ensemble un angle aigu α1 inférieur à α0, tandis que lesdits moyens d'actionnement comportent au moins une barre rotative (24, 50), d'axe parallèle au plan formé par ladite roue à eau (2), ladite barre rotative (24, 50) étant entraînée en rotation autour dudit axe (X) par ladite roue à eau (2) au travers d'un arbre (8) couplé audit moyeu (5), et comportant au moins une extrémité libre solidaire d'un organe conçu apte à agir sur le volet supérieur (13) ou le fond (12) de ladite enceinte pour provoquer son déplacement depuis son état inactif vers son état actif.

2. Dispositif (1, 10) selon la revendication 1, **caractérisé en ce que** ledit organe est défini par une roulette (25) montée en rotation sur l'extrémité libre de la barre rotative (24), autour d'un axe parallèle à l'axe X, ladite roulette (25) étant conçue apte à exercer sur le volet supérieur (13) une action ayant une composante d'allure verticale orientée en direction du cours d'eau, au cours de la rotation de la barre rotative (24).

3. Dispositif (100) selon la revendication 1, **caractérisé en ce que** ledit organe est défini par une bielle (51) dont une première extrémité est solidaire de l'extrémité libre de la barre rotative (50) et une seconde extrémité est montée en rotation autour d'un axe parallèle à l'axe X sur un bras (53) s'étendant dans le prolongement du volet supérieur (13) ou du fond (12) de ladite enceinte, parallèlement au plan formé par ces derniers.

4. Dispositif (1, 10, 100) selon l'une quelconque des revendications 1 à 3, **caractérisé en ce que** ladite enceinte renferme au moins un moyen de rappel élastique s'étendant entre ledit fond (12) et ledit volet supérieur (13), et à l'encontre duquel s'effectue le déplacement vers son état actif dudit volet supérieur (13).

5. Dispositif (1, 10, 100) selon l'une quelconque des revendications 1 à 4, **caractérisé en ce que** ledit volet supérieur (13) est monté en rotation par rapport audit fond (12) et est relié à des moyens de guidage en rotation.

6. Dispositif (1, 10, 100) selon l'une quelconque des revendications 1 à 5, **caractérisé en ce que** la paroi périphérique (15) est pliée en accordéon en formant des plis horizontaux et est mobile entre une position étirée et une position resserrée.

7. Dispositif (1, 10, 100) selon la revendication 6, **caractérisé en ce que** la paroi périphérique (15) est au moins partiellement réalisée en vitrimère (marque déposée) « souple », tandis que le volet supérieur (13) et/ou le fond (12) est/sont réalisé(s) en un matériau rigide tel que du vitrimère (marque déposée) « dur ».

8. Dispositif (1) selon l'une quelconque des revendications 1 à 7, **caractérisé en ce qu'**il comporte un réservoir (27) d'air comprimé relié à l'orifice de sortie d'air comprimé de ladite enceinte par un premier canal (26) et à un orifice d'entrée d'air comprimé de ladite turbine (20) par un second canal (28).

9. Dispositif (1) selon la revendication 8, **caractérisé en ce que** l'ouverture et la fermeture desdits premier et second canaux (26, 28) sont pilotées par des première et seconde électrovannes (41, 42).

10. Dispositif (1, 10, 100) selon l'une quelconque des revendications 1 à 9, **caractérisé en ce que** ladite enceinte comporte un orifice de sortie d'air comprimé relié avec ladite turbine au moyen d'un canal (29) configuré pour déboucher dans ledit cours d'eau.

11. Dispositif (1) selon la revendication 10, **caractérisé en ce que** le canal (29) est configuré pour circuler sur le trajet effectué par l'air comprimé après son injection dans ladite turbine (20) à travers son orifice d'entrée d'air comprimé.

12. Dispositif (10, 100) selon l'une quelconque des revendications 1 à 7, **caractérisé en ce que** ledit au moins un moyen de compression d'un fluide comporte au moins un vérin hydraulique (43) ou un moteur hydrostatique s'étendant dans ladite enceinte entre ledit fond (12) et ledit volet supérieur (13).

13. Dispositif (10, 100) selon la revendication 12, **caractérisé en ce que** le vérin hydraulique (43) ou un moteur hydrostatique est relié à ladite turbine (20) au moyen de canaux (31, 33) entre lesquels est placé au moins un réservoir (32) d'huile comprimée.

14. Dispositif (1, 10, 100) selon l'une quelconque des revendications précédentes, **caractérisé en ce que** ladite plate-forme est pourvue de flotteurs (7).

## Patentansprüche

1. Vorrichtung (1, 10) zum Erzeugen von Wasserkraft, die wenigstens ein Wasserrad (2) umfasst, das mit wenigstens einer Plattform fest verbunden ist, von der wenigstens eine obere Fläche (60) herausragt, wobei das Wasserrad (2) aus mehreren Schaufeln (3) ausgebildet ist, die die freien Enden von Armen (4) verlängern, die um eine Nabe (5) verteilt sind, und dafür bestimmt ist, unter der Wirkung des Wasserflusses von einem Wasserlauf (50) um eine horizontale Verlaufsachse (X), die senkrecht zu der Richtung des Wasserflusses von dem Wasserlauf (50) ist, zum Treiben einer Turbine (20) und Erzeugen von Elektrizität durch einen Generator (21) drehend angetrieben zu werden, **dadurch gekennzeichnet, dass** sie Mittel zur Betätigung, unter der Wirkung der Rotation des Wasserrads (2), wenigstens eines Mittels zum Komprimieren eines Fluids umfasst, das dafür bestimmt ist, die Turbine (20) zu versorgen, und dass das wenigstens eine Mittel zum Komprimieren eines Fluids wenigstens einen Luftkompressor (11) umfasst, der ein Gehäuse aufweist, das mit wenigstens einer Lufteinlassöffnung und wenigstens einer Auslassöffnung für komprimierte Luft versehen ist, die mit der Turbine (20) in Verbindung stehen, wobei das Gehäuse durch einen Boden (12), eine obere Klappe (13) und eine Umfangswand (15) begrenzt ist, von der wenigstens ein Teil verformbar ist, wobei der Boden (12) oder die obere Klappe (13) zwischen einem inaktiven Zustand, in dem der Boden (12) und die obere Klappe (13) zusammen einen spitzen Winkel α0 ausbilden, und einem aktiven Zustand bewegbar ist, in dem sie zusammen einen spitzen Winkel α1 ausbilden, der kleiner als α0 ist, während die Betätigungsmittel wenigstens einen Drehstab (24, 50) mit einer Achse, die parallel zu der durch das Wasserrad (2) ausgebildeten Ebene ist, umfassen, wobei der Drehstab (24, 50) durch das Wasserrad (2) mittels einer mit der Nabe (5) gekoppelten Welle (8) um die Achse (X) drehend angetrieben wird und wenigstens ein freies Ende umfasst, das mit einem Element fest verbunden ist, das konzipiert ist, auf die obere Klappe (13) oder den Boden (12) des Gehäuses zum Verursachen ihrer/seiner Verschiebung von ihrem/seinem inaktiven Zustand in ihren/seinen aktiven Zustand einwirken zu können.

2. Vorrichtung (1, 10) nach Anspruch 1, **dadurch gekennzeichnet, dass** das Element durch eine Laufrolle (25) definiert ist, die um eine Achse, die parallel zu der Achse X ist, an dem freien Ende des Drehstabs (24) drehbar montiert ist, wobei das Laufrad (25) konzipiert ist, im Laufe der Drehung des Drehstabs (24) eine Einwirkung auf die obere Klappe (13) ausüben zu können, die eine Verlaufskomponente aufweist, die in Richtung des Wasserlaufs vertikal ausgerichtet ist.

3. Vorrichtung (100) nach Anspruch 1, **dadurch gekennzeichnet, dass** das Element durch eine Schubstange (51) definiert ist, von der ein erstes Ende mit dem freien Ende des Drehstabs (50) fest verbunden ist und ein zweites Ende um eine Achse, die parallel zu der X-Achse ist, an einem Arm (53) drehbar montiert ist, der sich in der Verlängerung der oberen Klappe (13) oder des Bodens (12) des Gehäuses parallel zu der Ebene, die durch letztere ausgebildet ist, erstreckt.

4. Vorrichtung (1, 10, 100) nach einem der Ansprüche 1 bis 3, **dadurch gekennzeichnet, dass** das Gehäuse wenigstens ein elastisches Rückstellmittel einschließt, das sich zwischen dem Boden (12) und der oberen Klappe (13) erstreckt und gegenüber dem die Verschiebung der oberen Klappe (13) in ihren aktiven Zustand ausgeführt wird.

5. Vorrichtung (1, 10, 100) nach einem der Ansprüche 1 bis 4, **dadurch gekennzeichnet, dass** die obere Klappe (13) relativ zu dem Boden (12) drehbar montiert ist und an Führungsmitteln drehbar befestigt ist.

6. Vorrichtung (1, 10, 100) nach einem der Ansprüche 1 bis 5, **dadurch gekennzeichnet, dass** die Umfangswand (15) ziehharmonikaartig gefaltet ist, wobei sie horizontale Falten ausbildet, und zwischen einer gestreckten Position und einer zusammengezogenen Position bewegbar ist.

7. Vorrichtung (1, 10, 100) nach Anspruch 6, **dadurch gekennzeichnet, dass** die Umfangswand (15) wenigstens teilweise aus einem "flexiblem" Vitrimer (eingetragenes Warenzeichen) gefertigt ist, während die obere Klappe (13) und/oder der Boden (12) aus einem steifen Material wie das eines "harten" Vitrimers (eingetragenes Warenzeichen) gefertigt ist.

8. Vorrichtung (1) nach einem der Ansprüche 1 bis 7, **dadurch gekennzeichnet, dass** sie einen Behälter (27) für komprimierte Luft umfasst, der durch einen ersten Kanal (26) mit der Auslassöffnung für komprimierte Luft des Gehäuses und durch einen zweiten Kanal (28) mit einer Einlassöffnung für komprimierte Luft der Turbine (20) verbunden ist.

9. Vorrichtung (1) nach Anspruch 8, **dadurch gekennzeichnet, dass** das Öffnen und das Schließen des ersten und des zweiten Kanals (26, 28) durch ein erstes und ein zweites Magnetventil (41, 42) gesteuert werden.

10. Vorrichtung (1, 10, 100) nach einem der Ansprüche 1 bis 9, **dadurch gekennzeichnet, dass** das Gehäuse eine Auslassöffnung für komprimierte Luft umfasst, die mit der Turbine mittels eines Kanals (29) verbunden ist, der konfiguriert ist, in den Wasserlauf zu münden.

11. Vorrichtung (1) nach Anspruch 10, **dadurch gekennzeichnet, dass** der Kanal (29) konfiguriert ist, auf der Strecke zu zirkulieren, die durch die komprimierte Luft nach ihrem Zuführen in die Turbine (20) über ihre Einlassöffnung für komprimierte Luft ausgeführt wird.

12. Vorrichtung (10, 100) nach einem der Ansprüche 1 bis 7, **dadurch gekennzeichnet, dass** das wenigstens eine Mittel zum Komprimieren eines Fluids wenigstens einen Hydraulikantrieb (43) oder einen hydrostatischen Motor umfasst, der sich in dem Gehäuse zwischen dem Boden (12) und der oberen Klappe (13) erstreckt.

13. Vorrichtung (10, 100) nach Anspruch 12, **dadurch gekennzeichnet, dass** der Hydraulikantrieb (43) oder ein hydrostatischer Motor mit der Turbine (20) mittels Kanälen (31, 33) verbunden ist, zwischen denen wenigstens ein Behälter (32) für Pressöl platziert ist.

14. Vorrichtung (1, 10, 100) nach einem der vorhergehenden Ansprüche, **dadurch gekennzeichnet, dass** die Plattform mit Schwimmern (7) versehen ist.

## Claims

1. Device (1, 10) for producing hydroelectric power, comprising at least one water wheel (2) rigidly connected to at least one platform of which at least one upper face (60) is above water, said water wheel water (2) being formed by a plurality of blades (3) which extend the free ends of arms (4) distributed around a hub (5), and being intended to be rotated, under the effect of the flow of water from a watercourse (50), about a horizontal-type axis (X), which is perpendicular to the direction of flow of said watercourse (50), so to actuate a turbine (20) and produce electricity via a generator (21), **characterized in that** said device comprises means for actuating, under the effect of the rotation of the water wheel (2), at least one means for compressing a fluid for supplying said turbine (20), and **in that** said at least one fluid compression means comprises at least one air compressor (11) having an enclosure provided with at least one air inlet, and at least one compressed air outlet communicating with said turbine (20), said enclosure being delimited by a bottom (12), an upper flap (13), and a peripheral wall (15) of which at least a part is deformable, said bottom (12) or said upper flap (13) being movable between an inactive state in which said bottom (12) and said upper flap (13) together form an acute angle α0 and an active state in which they together form an acute angle α1 less than α0, while said actuating means comprise at least one rotary bar (24, 50), having an axis parallel to the plane formed by said water wheel (2), said rotating bar (24, 50) being rotated about said axis (X) by said water wheel (2) via a shaft (8) coupled to said hub (5), and comprising at least one free end rigidly connected to a member designed to be able to act on the upper flap (13) or the bottom (12) of said enclosure so as to cause it to move from its inactive state to its active state.

2. Device (1, 10) according to claim 1, **characterized in that** said member is defined by a roller (25) rotatably mounted on the free end of the rotary bar (24) about an axis parallel to the axis X, said roller (25) being designed to be able to exert, on the upper flap (13), during the rotation of the rotary bar (24), an action having a vertical-type component oriented toward the watercourse.

3. Device (100) according to claim 1, **characterized in that** said member is defined by a connecting rod (51), a first end of which is rigidly connected to the free end of the rotary bar (50) and a second end of which is rotatably mounted, about an axis parallel to the X axis, on an arm (53) extending in the extension of the upper flap (13) or of the bottom (12) of said enclosure, in parallel with the plane formed by said flap and said bottom.

4. Device (1, 10, 100) according to any of claims 1 to 3, **characterized in that** said enclosure contains at least one resilient return means which extends between said bottom (12) and said upper flap (13), and against which said upper flap (13) moves toward its active state.

5. Device (1, 10, 100) according to any of claims 1 to 4, **characterized in that** said upper flap (13) is rotatably mounted with respect to said bottom (12) and is connected to means for guiding in rotation.

6. Device (1, 10, 100) according to any of claims 1 to 5, **characterized in that** the peripheral wall (15) is accordion-folded by forming horizontal folds and is movable between an extended position and a retracted position.

7. Device (1, 10, 100) according to claim 6, **characterized in that** the peripheral wall (15) is at least partially made of "flexible" vitrimer (registered trademark), while the upper flap (13) and/or the bottom (12) is/are made of a rigid material such as "hard" vitrimer (registered trademark).

8. Device (1) according to any of claims 1 to 7, **characterized in that** it comprises a compressed air reservoir (27) connected to the compressed air outlet of said enclosure by a first channel (26) and to a compressed air inlet of said turbine (20) by a second channel (28).

9. Device (1) according to claim 8, **characterized in that** the opening and closing of said first and said second channel (26, 28) are controlled by a first and a second solenoid valve (41, 42).

10. Device (1, 10, 100) according to any of claims 1 to 9, **characterized in that** said enclosure comprises a compressed air outlet connected to said turbine by means of a channel (29) configured to lead into said watercourse.

11. Device (1) according to claim 10, **characterized in that** the channel (29) is configured to travel on the path that is followed by the compressed air after its injection into said turbine (20) through the compressed air inlet of said turbine.

12. Device (10, 100) according to any of claims 1 to 7, **characterized in that** said at least one fluid compression means comprises at least one hydraulic cylinder (43) or a hydrostatic motor extending in said enclosure between said bottom (12) and said upper flap (13).

13. Device (10, 100) according to claim 12, **characterized in that** the hydraulic cylinder (43) or a hydrostatic motor is connected to said turbine (20) by means of channels (31, 33) between which at least one compressed oil reservoir (32) is placed.

14. Device (1, 10, 100) according to any of the preceding claims, **characterized in that** said platform is provided with floats (7).
